**Europäisches Patentamt**

**European Patent Office**

**Office européen des brevets**

(19)

(11) **EP 1 195 875 A2**

(12) ## EUROPEAN PATENT APPLICATION

(43) Date of publication:
**10.04.2002 Bulletin 2002/15**

(51) Int Cl.7: **H02H 3/40**

(21) Application number: **01660177.5**

(22) Date of filing: **21.09.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **22.09.2000 FI 20002097**

(71) Applicant: **ABB Substation Automation Oy
65101 Vaasa (FI)**

(72) Inventor: **Nikander, Ari
33820 Tampere (FI)**

(74) Representative: **Hovi, Simo et al
Seppo Laine Oy,
Itämerenkatu 3 B
00180 Helsinki (FI)**

(54) **Method for identification of a faulting or faulted sending end or feeder branch in an electrical distribution system such as a compensated network**

(57) The invention relates to a method for identification of an impending fault condition of feeder or faulted feeder or feeder branch in an electrical distribution system such as a compensated network. According to the method, a first set of parameter values is measured from the electrical network in order to determine a change in the ground-fault current, the tuning of the network grounding system is altered in a first direction and at least one second set of parameter values is measured in the new tuning state altered in the first direction in order to determine the change in the ground-fault current. According to the invention, the change in the ground-fault current is computed on the basis of the at least one first set of parameter values and the at least one second set of parameter values, and the impending fault condition of feeder in a feeder or faulted feeder or feeder branch is indentified based on at least one such a computed change in the ground-fault current.

Fig. 2

**Description**

The invention relates to a method in accordance with claim 1 for identification of an impending fault condition of feeder or faulted feeder or feeder branch in an electrical distribution system such as a compensated network.

More specifically, the invention concerns a station-level monitoring method based on monitoring the insulation condition of a feeder, e.g., of a medium-voltage network, and then issuing the information to a multifunction numerical protective relay.

Conventionally, the detection of high-resistance ground faults is attempted through monitoring the absolute value of the zero-sequence voltage of an electric power system and the changes occurring therein. When the zero-sequence voltage exceeds a threshold value, an alarm signal is issued. This method provides no information on the location of the fault in the network.

EP patent publication 97942985.9 (FI Pat. No. 100922) discloses a method for detection and location of a high-resistance ground fault. Therein, fault indication is basically carried out as follows: the line-to-neutral voltages of the network with their phase angles are measured at the distribution substation, whereupon the zero-sequence voltage ($\underline{U}_0$) of the network is computed as a vector sum of the measured line-to-neutral voltages; the network zero-sequence impedance ($\underline{Z}_0$) is computed; and the zero-sequence voltage ($\underline{U}_0$) is compared to the line-to-neutral voltages ($\underline{U}_v$) and the total zero-sequence impedance ($\underline{Z}_0$) of the network. The variables thus obtained are then utilized for computing the fault impedances ($\underline{Z}_f$) for each phase separately and the phase conductor with the largest real part of the fault impedance ($\underline{Z}_f$) is assumed to be the faulted phase. The method measures a 10-minute average of the zero-sequence voltage and the changes thereof. Thus, the method cannot respond to fast changes in the zero-sequence voltage.

EP patent publication 98941445.3 (FI Pat. No. 103217) describes a method for locating a high-resistance ground fault of an electric distribution network on the basis of current measurements. The method is based on computing measured changes in the zero-sequence voltage and current of a feeder with regard to some longer-term average. The changes thus determined in the zero-sequence current are corrected by subtracting therefrom the effect of the current passing through the zero-sequence impedance in an unfaulted state of the feeder. Based on the thus compensated current changes, the faulted line section is assumed to be the one with the greatest change in the absolute values of its currents, whereby the change must also exceed a predetermined threshold.

US Pat. No. 4,729,052 discloses a method wherein the occurrence of a ground fault is detected by changing the neutral point grounding impedance of the network and then measuring the effect of the change on the neutral point voltage. This method is suitable for use in resonant-grounded systems only.

WO patent publication No. 9,627,138 (FI Pat. No. 973520) describes a method for detecting a single-phase ground fault in a three-phase network having the neutral point grounded via a ground-fault arc suppression coil. The method requires real-time information on the line-to-ground admittance of the feeder as well as on the unsymmetrical admittance reflecting the line unsymmetry at the feeder. The determination of the fault admittance used for fault indication requires that three pairs of measurement values ($U_0$, $I_0$) are acquired. Hence, the method is highly complicated and is suited only for fully compensated networks having arc-suppression reactors equipped with remote-controlled automatic tuning. Furthermore, the network must exhibit a quite high degree of unsymmetry before a sufficiently high zero-sequence voltage occurs. Most networks fail to meet these requirements.

The above-described prior art techniques are hampered by several drawbacks.

The fault indication sensitivity of the prior-art methods is inadequate, which excludes their use as insulation condition indicating methods capable of monitoring each one of the network feeders individually. The most advanced computation methods require real-time information on the electrical length of the line and are sensitive to errors in the value of the ground admittance. Also the inadequate resolution of measurement devices commonly used at substations makes it impossible to determine by computational means the real part of the line-to-ground admittance, i.e., the physically correct value of ground conductance. Furthermore, the value of ground conductance is likely to vary with the weather conditions, for instance.

A fault indication method based on monitoring the RMS value of the network zero-sequence voltage provides no information on the location of a fault in the network. A very-high-resistance ground fault of may impose a greater change to the phase angle of the zero-sequence voltage than to the absolute value of the voltage, which information cannot be exploited by a method based on zero-sequence voltage monitoring. Weather phenomena (e.g., snowfall) and changes in the network configuration or the tuning of the arc-suppression reactor of a compensated network also give rise to changes in the zero-sequence voltage of the network. Such changes are difficult to distinguish from those inflicted on the zero-sequence voltage by ground fault of a very high resistance, which makes the sensitivity of this method less than sufficient.

Prior-art methods for detecting high-resistance ground faults do not facilitate network monitoring individually for each feeder because the faulted feeder fault has to be resolved after the occurrence of the fault from the changes in the zero-sequence currents at the feeders. E.g., the method described in EP patent publication 97942985.9 is suited only for monitoring the overall leakage resistance of all phases of the network. The computation of the network zero-sequence impedance in said method is based on the zero-sequence susceptance values reported by the line conductor manufacturers that often involve notable inaccuracy. The line-to-ground capacitances of the network can be measured by means of ground fault tests, but such results are valid only for the network configuration prevailing during the tests. Furthermore, the network zero-sequence impedance must be computed within a higher-level system, whereupon the information must be transmitted to a protective relay. The benefits of the method include detection of the faulted phase and relatively good sensitivity.

According to the method disclosed in EP patent publication No. 97942985.9, the zero-sequence impedances of the feeders are only computed in conjunction with low-resistance ground faults. A fault is categorized as a low-resistance ground fault if the ground resistance $R_F$ is less than 5 kohm or if the zero-sequence voltage exceeds 50 % of the normal-condition line-to-neutral voltage. The method fails if the zero-sequence impedance of the feeder has changed due to network reconfiguration and no real-time value of the zero-sequence impedance is available when the fault occurs. The method is sensitive to error in the value of the zero-sequence impedance. In a fully compensated network where the ground-fault current is almost fully compensated, the change in the zero-sequence current at the feeder caused by a ground fault occurs in the same direction as the changes in the zero-sequence currents of the unfaulted feeders and has a magnitude approximately corresponding to the electrical length of the faulted feeder. Hereby the compensated current change computed by this method is close to zero even for a faulted feeder. Hence, the reliability of the method may be uncertain in a fully compensated network.

It is an object of the present invention to provide an entirely novel type of method for the idenfication of an impending fault condition of feeder or faulted feeder or feeder branch in an electrical distribution system such as a compensated network.

The invention is based on determining the change in the ground-fault current for each feeder at two or more, successively altered tuning settings of compensation and, if the change in the ground-fault current at any feeder is essentially different from zero, identifying that feeder as faulted. Alternatively, the computation of ground-fault current change may be performed using any deviation technique in lieu of the above-mentioned change of compensation tuning.

More specifically, the method according to the invention is characterized by what is stated in the characterizing part of claim 1.

The invention provides significant benefits.

The method according to the invention facilitates uncomplicated monitoring without detailed information on the network parameter values. Nonetheless, the method is sensitive inasmuch its fault indication is based on a change in the ground-fault current, whereby systematic errors in the measurement of the absolute values of network variables cancel each other thus giving a relatively good accuracy.

The invention also has a plurality of other embodiments offering further benefits.

The major advantage of certain embodiments of the invention over the methods and publications cited above is related to the simplicity of a practicable realization of the method and the possibility of embedding the method as a part of other network automation. Implementing the method in practice does not require *a priori* knowledge on the electrotechnical data of the network components (that is, the network parameter values). In fact, the present method can be appreciated as a black box whose input signals depending on its application are, e.g., the measured zero-sequence voltages, line-to-ground voltages and sum currents, while the output of the black box gives an indication of a ground fault that is sent as a unilateral event signal to a higher level automation system. The method can be implemented if so desired within a single compartmentalized cell terminal and the fault indication does not need communications with other protective relays or information processing systems, which makes the present method more robust and flexible than, e.g., the method disclosed EP patent publication 97942985.9. Furthermore, a secondary relay/substation associated with certain embodiments of the invention can be readily installed at a field disconnector station of the network. Inasmuch also this kind of application does not necessarily need supplementary initial information or communications with higher level relays or information systems for fault indication, a practical implementation of the present method is substantially more straightforward to implement than the method described in EP patent publication 97942985.9.

Perhaps the most significant benefit of the invention particularly over the technique disclosed in patent publication WO-9627138 is that an impending fault condition of feeder or feeder branch of an electrical distribution system can be detected without knowing *a priori* the specific parameter values of lines such as the line-to-ground susceptances ($B_0$). Furthermore, there is no need to determine the line-to-ground admittances by measurements. Additionally, fault indication can be made to operate reliably at all times, even when the fault occurs immediately after a configuration change at the feeder.

A remarkable advantage of the invention over the DDA method described in reference publication [Lei97] is that an impending fault condition of feeder or feeder branch can be identified without having *a priori* knowledge on the ground admittance of the feeder. This feature makes it possible to avoid the uncertainty and inaccuracy related to the value of the ground admittance, particularly to the ground conductance, of the feeder. Hereby, the sensitivity of fault indication and accuracy of fault resistance computation is improved. In practice, the physical line-to-ground conductance cannot be determined by means of the measurement instruments available at substations. As to its computation algorithm, the method of the invention differs entirely from the methods used in the reference publication [Lei97]. When applied according to its preferred embodiment, the method according to the invention can respond in ground-fault current monitoring of a feeder to changes that occur over a time interval greater than one cycle of the network frequency, which in a favorable contrast to a method disclosed, e.g., in EP patent publication 97942985.9 that monitors the zero-sequence voltage using a long-term value of the voltage averaged over several minutes and changes occurring therein. Moreover, the method can be applied to monitoring the performance of an electrical distribution network even when no changes due to natural causes occur in its zero-sequence voltage.

In such embodiments of the invention that utilize computations based on the line-to-ground admittances, it is possible by way of determining the line-to-ground admittances to both improve the accuracy of the fault current computations over those based on values derived computationally from the network data and provide the protective relay with the most recent information on the electrical length of a feeder. Resultingly, the value of ground resistance that reflects the insulation condition of a given feeder can be determined at a higher accuracy. In the determination of the electrical length of a feeder, the method can utilize such changes in the zero- sequence voltage that occur in a natural manner. Herein, the line-to-ground susceptance of a feeder can be computed in conjunction with low-resistance ground faults. If the network is of the compensated type and is equipped with an arc-suppression reactor controlled by an automatic tuning device, also a change in the zero-sequence voltage caused by tuning alterations can be utilized in the computation of the line-to ground admittances of the feeders.

In practice, the preferred embodiments of the invention facilitate monitoring the feeders of a network individually and verification of the monitoring results obtained by other indication techniques The method is capable detecting an existing fault and a faulty feeder. The value of fault resistance can be computed using a procedure to be described later in the text.

A further benefit of the invention is that its implementation does not necessarily need installation of new equipment, measurement means or transducers, but rather, its computational algorithms can be embedded by software means into digital multifunction relays so as to make use of existing measurement means.

As the computation of line-to-ground admittance at a feeder is based on a change in the zero-sequence current and the zero-sequence voltage instead of the absolute values of these variables, the error factor caused by the capacitance unsymmetry of the feeder is eliminated.

The values to be measured for the zero-sequence voltage and sum current and the changes occurring therein are small as compared to the rated value of measurement devices. Luckily, the method according to the invention utilizes only the change in the value of a measured variable rather than a discrete measurement value. Then, a significant portion of measurement error is cancelled, because any error tends to be in the same direction in the measurement performed before and after the change in the measured variable.

The monitoring of high-resistance ground faults is problematic due to the minimal leakage current of a feeder. In these faults, the most sensitive indicator variable that can be measured directly from the network is the zero-sequence voltage. However, a fault indication technique based on the RMS value of the zero-sequence voltage or a change in the leakage resistance of the entire network does not directly indicate the faulted feeder that must be identified by other methods. Advantageously, the embodiments of the present invention are capable of monitoring each feeder separately.

The method requires no information transmission between the protective relay and higher-level automation systems or relays. Furthermore, the embodiments of the invention disclosed herein may also be used for preventing secondary faults due to a ground fault (such as double ground faults) inasmuch faults can be detected before they impose any extra load on the unfaulted phases of the network.

The methods according to the preferred embodiments can indicate a decreased insulation condition of a feeder in an electrical distribution system at a sensitivity level much better than that of prior-art techniques thus making it possible to detect faults of higher resistance than what has conventionally been feasible. Furthermore, the existence of a fault can be detected more reliably and sensitively than before, because the identification of the faulted feeder needs no *a priori* computed ground admittance values.

The method described is broadly advantageous as it requires no new measurement arrangements or devices. All that is needed is the programming of a new functional block or blocks on the relay.

In the following, the invention will be described in more detail with the help of exemplary embodiments by making reference to the appended drawings, wherein

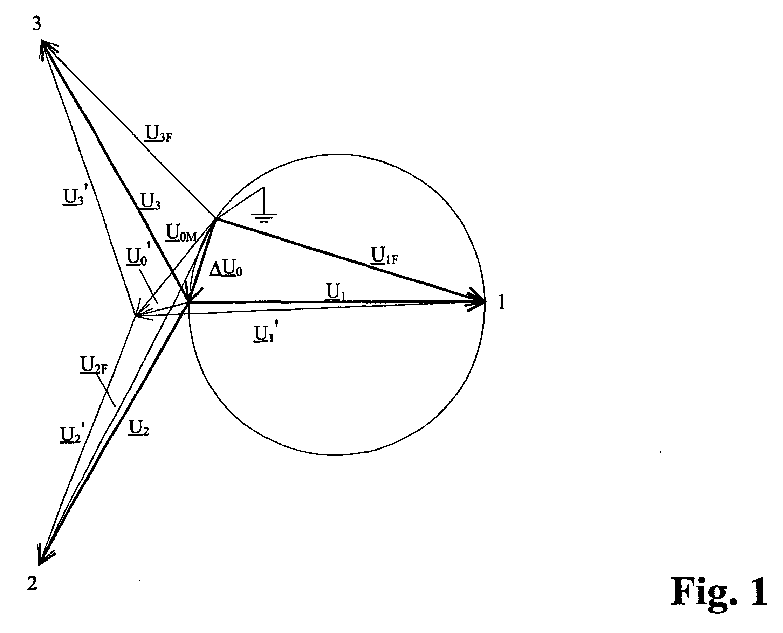

FIG. 1 is a graphical vector representation of the symmetrical line-to-neutral voltages of a network, the unsymmetrical line-to-neutral voltages in an unfaulted state of the network, the unsymmetrical line-to-neutral voltages during a fault and the corresponding zero-sequence voltages during the unfaulted and faulted condition of the network for a single-phase ground fault in an isolated-neutral network;

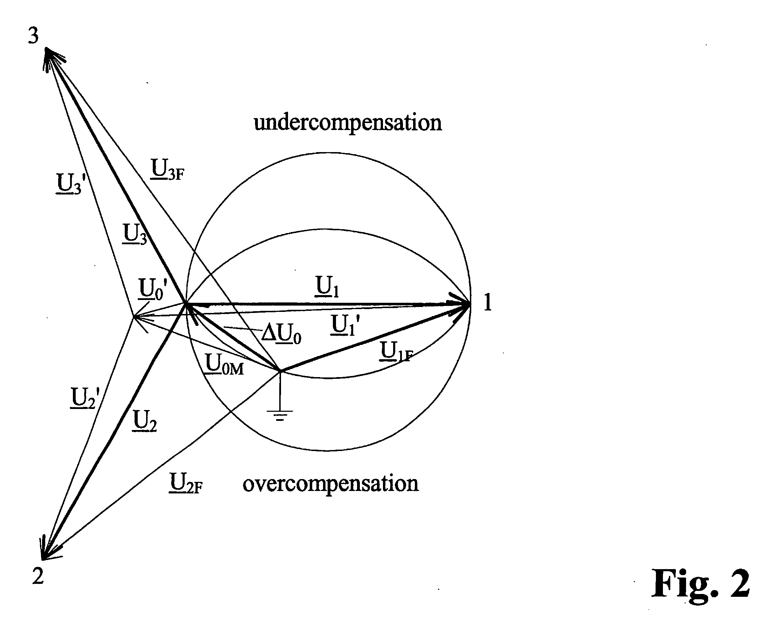

FIG. 2 is a graphical vector representation of the symmetrical line-to-neutral voltages of a network, the unsymmetrical line-to-neutral voltages in an unfaulted state of the network, the unsymmetrical line-to-neutral voltages during a fault and the corresponding zero-sequence voltages during the unfaulted and faulted condition of the network for a single-phase ground fault in a compensated network; and

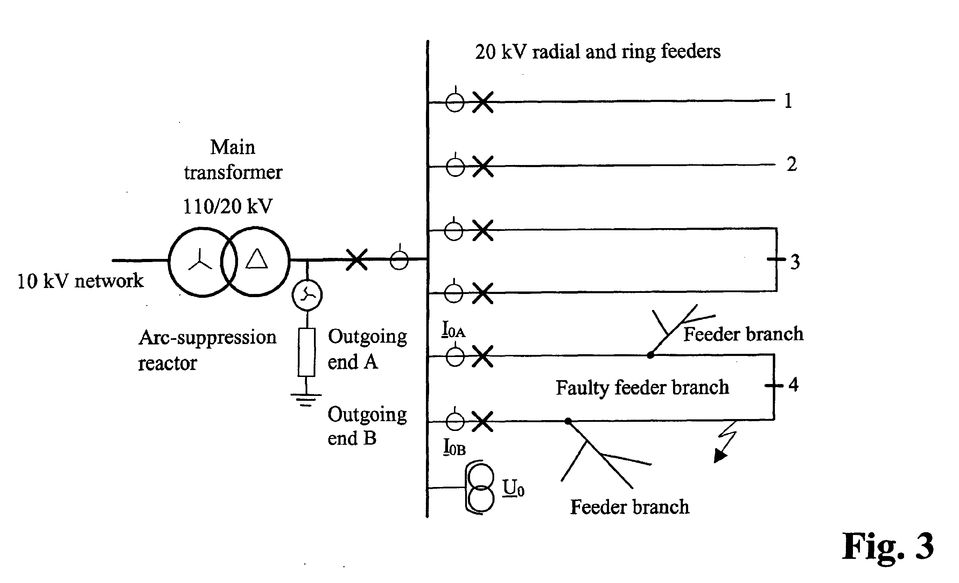

Figure 3 illustrates an exemplary embodiment of a compensated medium-voltage network comprising both radial feeders and ring feeders. The feeders connected in a ring are supplied from one and the same substation, e.g. a 110/20 kV station.

In the context of the present invention, the terms sum current and zero-sequence current are used equally when reference is made to the sum of the phase currents, particularly to the vector sum of the phase currents or to a sum current computed from the respective phasors. The sum current of a feeder can be measured using a cable current transformer, for example.

In an electrical network, the line-to-ground admittance $\underline{Y}_{0i}$ of a feeder i can be computed by dividing the change in the zero-sequence current $\Delta\underline{I}_{0i}$ with the change in the zero-sequence voltage $\Delta\underline{U}_0$ of the feeder. In the line-to-ground admittance thus computed, the real part of represents the conductance between the phases of the feeder and the ground, while the imaginary part represents the susceptance of the phases to the ground due to the line-to-ground capacitances:

$$\underline{Y}_{0i} = \frac{1}{R_{0i}} + j\omega C_{0i} = G_{0i} + jB_{0i} = \frac{\Delta\underline{I}_{0i}}{\Delta\underline{U}_0} \tag{1}$$

where

R$_{0i}$ =    leakage resistance from the three phases to the ground
G$_{0i}$ =    line-to-ground conductance summed for the three phases
C$_{0i}$ =    line-to-ground capacitance summed for the three phases
B$_{0i}$ =    line-to-ground susceptance summed for the three phases
$\omega$ =    angular frequency.

Normally, the physical leakage resistance of an unfaulted feeder connected to a feeder is in the range of megaohms, and thus, the line-to-ground conductance is in the order of $10^{-6}$ 1/$\Omega$. The line-to-ground conductance values computed from Eq. 1 on the basis of field measurements are often within the same decade with the corresponding line-to-ground susceptance of the feeder. As this is contradictory to physical facts, the line-to-ground susceptance values thus obtained may be considered to represent a virtual parameter value, chiefly traceable to measurement inaccuracies. The resolution of measurement devices at substations and the sampling rate of digital protective relays are generally not adequate for determining the physically correct line-to-ground conductance of a feeder or the entire network by this technique. A more sensitive detection method in monitoring the electrical insulation condition of a feeder in an electric network is obtained if the line leakage resistance in the normal condition of the feeder is ignored altogether, and instead, only the line-to-ground susceptance of the feeder and the reactive component of the sum current thereof are used for computing the fault resistance. This approach allows the detection of a ground fault to be extended to fault resistances of significantly higher magnitude than what has been possible by previously known methods and, moreover, its computation algorithms give fault resistance values of an improved accuracy. According to field measurements performed and the experience gathered therefrom, the line-to-ground susceptance computed from Eq. 1 corresponds to the electrical length of the feeder to a very good accuracy.

**I Determination of the insulation condition of a feeder in an electrical network**

In the following, a method is described for determining the electrical insulation condition of a feeder in an electric network from the fault resistance, whereby in the method the fault resistance is computed individually for each feeder. As the computation uses only the imaginary part of the unfaulted-condition line-to-ground admittance of the feeder, that is, the line-to-ground susceptance, it is necessary to eliminate the reactive component from the sum current of the feeder. It must be noted that the sum current of the feeder also contains a component caused by the unsymmetry of the line-to-ground capacitances. Furthermore, at the level of the entire network, the unsymmetry of the line-to-ground capacitances gives rise to a small zero-sequence voltage in the network even under normal conditions. Hence, the effect of the unsymmetry of the line-to-ground capacitances must be eliminated from both the zero-sequence voltage and the sum currents of the feeders. In this manner, the computation is brought back to that of a symmetrical initial condition.

The computation starts with a change in the zero-sequence voltage of the network. The absolute value of the zero-sequence voltage change is computed from Eq. 2 given below. If the zero-sequence voltage change is caused by a ground fault, $\Delta\underline{U}_0$ is equal to the zero-sequence voltage component caused the ground fault (see FIG. 1) inasmuch the zero-sequence voltage of the unfaulted condition is subtracted from the zero-sequence voltage measured during the ground fault. This step eliminates the contribution of capacitance unsymmetry to the measured value of the zero-sequence voltage. When the absolute value of $\Delta\underline{U}_0$ exceeds a predetermined threshold value $U_{0k}$, the identification of the faulted phase and the computation of the fault resistance are started for all feeders. The vector $\Delta\underline{U}_0$ is also used as a reference vector in the computation.

$$|\Delta\underline{U}_0| = |\underline{U}_{0M} - \underline{U}_0'| \geq U_{0k} \qquad 2()$$

where

$\underline{U}_0'$ = measured zero-sequence voltage prior to change (normal network condition)
$\underline{U}_{0M}$ = measured zero-sequence voltage after change (possibly faulted network condition)

The fault resistance is computed individually for each feeder from the equation given below. All underlined symbols refer to vector variables. The vectors used in the computation are determined by simultaneous measurements. The computation of fault resistance is performed separately for each phase using the line-to-ground voltage of the faulted phase in the equations.

$$R_{Fi} = \frac{|\underline{U}_{vF}|\sin\varphi_{U_{vF}}}{|\Delta\underline{I}_{0i}|\sin\varphi_{I_{0i}} + B_{0i}|\Delta\underline{U}_0} \qquad (3)$$

$$\Delta\underline{I}_{0i} = \underline{I}_{02i} - \underline{I}_{01i} \qquad (4)$$

where

$R_{Fi}$ = fault resistance at feeder i
$\underline{U}_{vF}$ = voltage between faulted phase and ground
$\varphi_{U_{vF}}$ = differential phase angle between voltage vector $\underline{U}_{vF}$ of faulted phase and vector $\Delta\underline{U}_0$
$\Delta\underline{I}_{0i}$ = change in the sum current at feeder i
$\underline{I}_{01i}$ = sum current at feeder i prior to change in zero-sequence voltage
$\underline{I}_{02i}$ = sum current at feeder i after change in zero-sequence voltage
$\varphi_{I_{0i}}$ = differential phase angle between vectors $\Delta\underline{I}_{0i}$ and $\Delta\underline{U}_0$
$B_{0i}$ = summed line-to-ground susceptance of the three phases at feeder i (imaginary part of line-to-ground admittance).

The zero-sequence susceptance values $B_0$ of a feeders are always updated in connection with low-resistance ground faults. If necessary, also $B_0$ values computed from network data may be used. The method disclosed herein is not sensitive to an error in the value of the zero-sequence susceptance of a feeder, because it does not need the value of $B_0$ at all for identifying a faulted phase and, besides, also the order of magnitude of the fault resistance indicates the occurrence of a fault.

The method described above may be carried out repetitively at arbitrary instants of time in order to compute $R_F$ so that a desired feeder or feeders can be monitored on a continuous basis. When the fault resistance $R_F$ is smaller than its predetermined threshold value $R_{Fk}$, the feeder is interpreted as faulted. The time interval in the determination of $R_F$ may be made as short as one cycle of the network frequency thus allowing even temporary ground faults of short duration to be identified.

**II Determination of electrical insulation condition of feeders feeding a ring in an electrical network**

A high-voltage electrical distribution network is usually configured using ring feeders to provide alternative feed paths in a faulted network and to improve the overall reliability of the network. In the following, the indication of a ground fault is examined in the case of feeders configured into a ring feeder. The feeders (feeders A+B in FIG. 3) comprise two radial feeders supplied by the feeders (feeders A and B of FIG. 3) that are connected to each other in the field so as to form a ring feeder.

Very high-resistance ground faults occurring in a ring feeder can be identified using the same algorithm (Eq.

3) as that applicable in the case of a radial feeder. The only difference is that sum current of the radial feeder is replaced by the sum current of the zero-sequence current of the radial feeder. The fault resistance is computed from Eq. 5 with the feeders A and B being connected in a ring using the notations of FIG. 3. The term "total sum current of ring-connected feeders" is used to denote the sum of the zero-sequence currents of feeders A and B.

$$R_{Fi} = \frac{|\underline{U}_{vF}|\sin \varphi_{U_{vF}}}{|\Delta \underline{I}_{0AB}|\sin\varphi_{I_{0AB}} + B_{0r}|\Delta \underline{U}_0|} \quad (5)$$

$$\Delta \underline{U}_0 = \underline{U}_{0M} - \underline{U}_0' \quad 6()$$

$$\Delta \underline{I}_{0AB} = (\underline{I}_{0A2} + \underline{I}_{0B2}) - (\underline{I}_{0A1} + \underline{I}_{0B1}) \quad (7)$$

$$\varphi_{U_0} = \arg(\underline{U}_{0M} - \underline{U}_0'), \; \varphi_{I_{0AB}} = \arg(\Delta \underline{I}_{0AB}) - \varphi_{U_0} \quad (8)$$

where

$R_{Fi}$ =     fault resistance at ring-connected feeder i
$\underline{U}_0'$ =     zero-sequence voltage of network prior to change
$\underline{U}_{0M}$ =     zero-sequence voltage of network after change
$\underline{I}_{0A1}$ =     zero-sequence sum current of ring-connected feeder A prior to change in zero-sequence voltage
$\underline{I}_{0B1}$ =     zero-sequence sum current of ring-connected feeder B prior to change in zero-sequence voltage
$\underline{I}_{0A2}$ =     zero-sequence sum current of ring-connected feeder A after change in zero-sequence voltage
$\underline{I}_{0B2}$ =     zero-sequence sum current of ring-connected feeder B after change in zero-sequence voltage
$\varphi_{U_0}$ =     phase angle of vector $\Delta \underline{U}_0$
$\varphi_{I_{0AB}}$ =     differential phase angle between vectors $\Delta I_{0AB}$ and $\Delta \underline{U}_0$
$B_{0r}$ =     summed line-to-ground susceptance of a ring-connected feeder (FIG. 3: A+B) (sum of all three phases). Fault resistance computation is performed separately for each phase using the line-to-neutral voltage of the faulted phase in the equations. The ring connection of the feeders does not interfere with the identification of the faulted phase inasmuch this step is carried out by means of the line-to-neutral voltages and the zero-sequence voltage in the manner explained below.

**Identification of a faulted phase in an isolated-neutral network**

When the absolute value of $\Delta \underline{U}_0$ exceeds a predetermined threshold, the first task is to identify the faulted phase. The identification of a faulted phase is performed in a slightly different manner in regard to an isolated-neutral network and a resonant-ground network. In fact, the indication technique of a faulted phase in itself serves as a sensitive method of ground fault indication.

In FIG. 1 are shown in vector form the symmetrical line-to-neutral voltages of an isolated-neutral network, the unsymmetrical line-to-neutral voltages in an unfaulted state, the unsymmetrical line-to-neutral voltages during a ground fault, the zero-sequence voltage in an unfaulted state, the zero-sequence voltage measured during a ground fault, and the zero-sequence voltage representing a system of symmetrical initial state after a ground fault. In an isolated-neutral network, the zero-sequence voltage and the voltage of a faulted phase trace a semicircular arc as a function of the fault resistance. This means that during a ground fault, the voltage of a faulted phase leads by 90° the zero-sequence voltage ($\Delta \underline{U}_0$) of a symmetrical initial state irrespective of the magnitude of the fault resistance. In practice, even normally operating network always has a small zero-sequence voltage due to the unsymmetry of the line-to-ground capacitances, whereby also the line-to-neutral voltages in an unfaulted network are unsymmetrical. When the vector of the zero-sequence voltage measured prior to the fault is subtracted from the vector of the zero-sequence voltage measured during the fault, a zero-sequence voltage representing a symmetrical initial state is obtained. The faulted phase is interpreted to be the one having its line-to-neutral voltage leading the reference vector $\Delta \underline{U}_0$ by approximately 90°. In practice, due to measurement inaccuracies, the lead angle may deviate a few degrees from this threshold value. Having for example phase 1 faulted, the voltage phasor angles of the individual phases in regard to the zero-sequence voltage phasor are as follows. The equations are computed assuming an ideal case (90° lead).

$$\varphi_{U_{1F}} = 90°, \; \varphi_{U_{2F}} = \varphi_{U_{1F}} - 120° = -30° \; \varphi_{U_{3F}} = \varphi_{U_{1F}} - 240° = -150° \tag{9}$$

The following notations are used in FIG. 1:

| | |
|---|---|
| $1,2,3 =$ | phase subindexes |
| $\underline{U}_0' =$ | zero-sequence voltage during unfaulted state |
| $\underline{U}_{0M} =$ | zero-sequence voltage measured during ground fault |
| $\Delta\underline{U}_0 =$ | zero-sequence voltage during ground fault corresponding to a symmetrical initial state |
| $\underline{U}_1, \underline{U}_2, \underline{U}_3 =$ | symmetrical line-to-neutral voltages |
| $\underline{U}_1', \underline{U}_2', \underline{U}_3' =$ | unsymmetrical line-to-ground voltages during unfaulted state |
| $\underline{U}_{1F}, \underline{U}_{2F}, \underline{U}_{3F} =$ | unsymmetrical line-to-ground voltages during ground fault |

The voltage between a faulted phase and ground during a ground fault is independent from the capacitance unsymmetry of the network and the zero-sequence voltage measured in an unfaulted state (Figure 1). The zero-sequence voltage $\Delta\underline{U}_0$ corresponding to an unfaulted initial state may be computed from the following equation.

$$\Delta\underline{U}_0 = \underline{U}_{0M} - \underline{U}_0' \tag{10}$$

In the identification of a faulted phase and computation of the fault resistance, a zero-sequence voltage corresponding to a symmetrical initial state is used, because only under this condition Eq. (9) defining the phase angles is valid. The phasor of the zero-sequence voltage in an unfaulted state and the phasor of the zero-sequence voltage during a fault are known from measurements. In an isolated-neutral network, the nominator of Eq. 3 is positive in the case of a faulted phase and negative in the case of unfaulted phases. This rule may be used to check the indication result of a faulted phase.

Alternatively, the value of $\Delta\underline{U}_0$ corresponding to an unfaulted initial state may also be determined in another fashion. Herein, those line-to-line voltages of the network which do not change as a consequence of a ground fault are measured continuously. These line-to-line voltages can be used to determine the symmetrical line-to-neutral voltages $\underline{U}_1$, $\underline{U}_2$ and $\underline{U}_3$. These line-to-line voltages should be approximately equal for both an unfaulted state and a ground fault. In practice, the absolute values of the line-to-line voltages differ from each other slightly due to measurement inaccuracy. The voltage may also contain a slight negative-sequence component. The absolute value of the line-to-neutral voltage may be assumed to be equal to, e.g., the average value of three line-to-line voltages:

$$|\underline{U}_1| = |\underline{U}_2| = |\underline{U}_3| = \frac{|\underline{U}_{12}| + |\underline{U}_{13}| + |\underline{U}_{23}|}{3\sqrt{3}} \tag{11}$$

Accordingly, the absolute values of each one of the symmetrical line-to-neutral voltages $\underline{U}_1$, $\underline{U}_2$, $\underline{U}_3$ (FIG. 1) are set equal to the value of $|\underline{U}_1|$ computed from Eq. 11, and the phase angles are set equal to those of a symmetrical condition. In an unfaulted state, the phase angle of $\underline{U}_1$ equal to that of vector ($\underline{U}_1' - \underline{U}_0'$) or, respectively, during a ground fault, equal to that of vector ($\underline{U}_{1F} - (\underline{U}_{0M} - \underline{U}_0')$). The phase angles of the line-to-neutral voltages are set equal to their ideal values, e.g., arg($\underline{U}_1$) = 30°, arg($\underline{U}_2$) = -90°, arg($\underline{U}_3$) = 150°. When the absolute values and phase angles of the line-to-neutral voltages are determined in this manner, ideally symmetrical voltages can be utilized in the computations. Resultingly, the zero-sequence voltage $\Delta\underline{U}_0$ corresponding to a symmetrical initial state can be determined directly by means of the measured voltage of the faulted phase and the symmetrical line-to-neutral voltage computed in the above-described manner (FIG. 1 and Eq. 12).

$$\underline{U}_0 = \underline{U}_{1F} - \underline{U}_1 = \underline{U}_{2F} - \underline{U}_2 = \underline{U}_{3F} - \underline{U}_3 \tag{12}$$

As the line-to-neutral voltages $\underline{U}_{1F}$, $\underline{U}_{2F}$ and $\underline{U}_{3F}$ during a very-high-resistance ground fault are close to those of an unfaulted state, their measurement can be performed with a good accuracy. If the change $\Delta\underline{U}_0$ of the zero-sequence voltage is computed from Eq. 10, the greatest component in the inaccuracy of measurements relates to the value computed for $\Delta\underline{U}_0$. This is because the neutral voltage values to be measured are usually small.

In the identification of a faulted phase, the above-described method already inherently offers a sensitive technique of fault indication. It must be noted that the zero-sequence voltage vector $\underline{U}_0'$, which may be present even in an unfaulted state due the capacitance unsymmetry of the network, can have any phase angle. If the network zero-sequence voltage changes due to a change in line length or unsymmetry, it may haphazardly occur that any one of the line-to-neutral voltage leads by 90° the vector $\Delta \underline{U}_0$ representing a change in the zero-sequence voltage. While the probability of such a situation is small, the result from the identification of a faulted phase is not inherently a fully adequate condition for interpreting the existence of a fault. Herein, the magnitude of the fault resistance will give proof that none of the feeders is faulted. Accordingly, the identification of a possibly faulted phase is a prerequisite for the computation of the fault resistance.

**Identification of a faulted phase in a resonant-ground network**

FIG. 2 illustrates the symmetrical line-to-neutral voltages of a resonant-ground network, the unsymmetrical line-to-neutral voltages in an unfaulted state, the unsymmetrical line-to-neutral voltages during a ground fault, the zero-sequence voltage in an unfaulted state, the zero-sequence voltage representing a system of symmetrical initial state after a ground fault, and the neutral voltage measured during a ground fault. The voltages are denoted by the same symbols as those used in FIG. 1. The zero-sequence voltage and the voltage of a faulted phase trace an arc as a function of the fault resistance, the radius of the arc being determined by the degree of compensation in the network. The upper semicircular arc corresponds to an isolated-neutral situation and the lower semicircular arc to infinite overcompensation.

In a resonant-ground network, the identification of a faulted phase is more complicated to implement than in an isolated-neutral network. Referenced to the zero-sequence voltage $\Delta \underline{U}_0$, the phase angle $\varphi_{U_{vF}}$ of the voltage of a faulted phase may vary between 90° and 180° in an undercompensated network and between -90° and -180° in an overcompensated network. At a low degree of compensation, the phase angle $\varphi_{U_{vF}}$ approaches 90°, while in a clearly overcompensated network the angle is -90°. When the arc-suppression reactor is tuned very close to resonance, the angle $\varphi_{U_{vF}}$ approaches 180°. Hence, the identification of a faulted phase by this technique is not a method as effective in fault indication as that described above for the identification of a faulted phase of an isolated-neutral network. This is because changes in the zero-sequence voltage caused by reasons other than a ground fault are more likely to shift the phase angle of any one of line-to-neutral voltage relative to the zero-sequence voltage $\Delta \underline{U}_0$ to within a range of angle values where the phase is interpreted as faulted. However, the computed fault resistance herein reveals that the feeder is unfaulted. Thus, the method indicates the phase which may be faulted. From the angle $\varphi_{U_{vF}}$, it is also possible to infer whether the network is under- or overcompensated. If a ground fault is detected in the network, the angle $\varphi_{U_{vF}}$ will also make it possible to determine the degree of compensation of the network. This is particularly advantageous when the network is equipped with fixed (nonadjustable) compensation, either at a substation or in a distributed manner at different points of the network, and there is no measurement data available on the neutral currents passing through the reactors. In such a situation, it is difficult to accurately determine the degree of compensation in the network by any other means.

After the network has been tuned to resonance, the zero-sequence voltage vector ($\Delta \underline{U}_0$) is directed in the opposite direction relative to the vector of the symmetrical line-to-neutral voltage of the faulted phase. In a fully compensated symmetrical system, the voltage of the faulted phase is always the lowest, because the residual current is then fully resistive. Also this information can be used as an ensuring condition in the determination of a faulted phase in a network that can be tuned to resonance.

**III Indication of an impending fault condition of feeder or faulted feeder in an electrical network from the direction of change in the sum current vector**

Both the method according to Eq. 3 as well as prior-art methods suited for identifying high-resistance faults correctly to the faulted feeder need realtime information on the electrical length of the feeder. For highest possible certainty in the detection and location of ground faults of a very high resistance, e.g., of hundreds of kilo-ohms, a technique is needed capable of eliminating the uncertainty factors associated with the ground susceptance of the feeder. Furthermore, the configuration of the feeder does not necessarily correspond to the value of ground susceptance $B_0$ stored in the system memory if a change has occurred in the feeder configuration just before the fault. The stored value of $B_0$ may also contain error due to inaccuracy in measurements. However, the method described below functions always correctly even if the fault occurs on a feeder whose configuration has changed just recently. As starting data, the method does not need the ground susceptance ($B_0$), whereby inaccuracies in the value thereof cannot affect the result of the indication algorithm.

In an isolated-neutral network, the reactive component of the sum current vector is directed opposite to the direction of the same vector in an unfaulted feeder. In the following, the reactive and real components of the sum current are discussed separately. The sum current vector component related to the capacitance unsymmetry may have any direction, which means that it can contribute virtual real or reactive current to the total sum current. Hence, its effect must be eliminated.

Changes caused by a ground fault in the vector direction of the feeder sum currents are computed for each change in the zero-sequence voltage. A precondition for the start of computation is that the change in the zero-sequence voltage exceeds a predetermined threshold level ($U_{0k}$).

$$|\Delta \underline{U}_0| = |\underline{U}_{0M} - \underline{U}_0'| \geq U_{0k} \tag{13}$$

where

$\underline{U}_0'$ = measured zero-sequence voltage prior to the change (normal state of network)
$\underline{U}_{0M}$ = measured zero-sequence voltage after the change (faulted state of network)

Theoretically, it is possible to deduct separately from both the real and the reactive components of the feeder sum current vector the direction toward which the zero-sequence sum current has occurred and, thence, the existence of a fault. However, in an isolated-neutral network, the information deducted from the real component is generally insufficient for this purpose. The most reliable technique is to indicate the faulted feeder by means of examining the direction of change in the reactive component of the sum current (Eqs. 14 and 15).

$$\Delta I_{0li} = |\underline{I}_{02i} - \underline{I}_{01i}|\sin(\varphi_{I_{0i}} - \varphi_{U_0}) < 0 \rightarrow \text{unfaulted feeder} \tag{14}$$

$$\Delta I_{0li} = |\underline{I}_{02i} - \underline{I}_{01i}|\sin(\varphi_{I_{0i}} - \varphi_{U_0}) > 0 \rightarrow \text{faulted feeder} \tag{15}$$

$$\Delta I_{0pi} = |\underline{I}_{02i} - \underline{I}_{01i}|\cos(\varphi_{I_{0i}} \, \varphi_{U_0}) > 0 \rightarrow \text{unfaulted feeder} \tag{16}$$

$$\Delta I_{0pi} = |\underline{I}_{02i} - \underline{I}_{01i}|\cos(\varphi_{I_{0i}} - \varphi_{U_0}) < 0 \rightarrow \text{faulted feeder} \tag{17}$$

$$\varphi_{I_{0i}} = \arg(\Delta \underline{I}_{0i}) = \arg(\underline{I}_{02i} - \underline{I}_{01i}) \tag{18}$$

$$\varphi_{U_0} = \arg(\Delta \underline{U}_0) = \arg(\underline{U}_{02} - \underline{U}_{01}) \tag{19}$$

where

$\Delta I_{0li}$ = change in reactive component of sum current at feeder i
$\Delta I_{0pi}$ = change in real component of sum current at feeder i
$\underline{I}_{01i}$ = sum current of feeder i prior to the change
$\underline{I}_{02i}$ = sum current of feeder i after the change
$\underline{U}_{01}$ = zero-sequence voltage prior to the change
$\underline{U}_{02}$ = zero-sequence voltage after the change
$\varphi_{I_{0i}}$ = phase angle of sum current change vector $\Delta I_{0i}$
$\varphi_{U_0}$ = phase angle of zero-sequence voltage change vector $\Delta \underline{U}_0$.

The fault indication method based on the indication of a change in the reactive component of the zero-sequence sum current (Eqs. 14 and 15) is suited for use in isolated-neutral and compensated networks. In a compensated network, the compensation offset (undercompensation) must be greater than electrical length ($B_0$) of the feeder to be monitored by this kind of fault indication method. For example, if the ground-fault current of an underground feeder cable is 50 % of the overall ground-fault current of the network and the network is operated with a degree of compensation of 70 %, the method is not suited for use on said underground feeder inasmuch the vector direction of the reactive component of the zero-sequence sum current does not change at the occurrence of a ground fault. However, the method is suited for use on other feeders supplied from the same substation, because the ground-fault current they can produce under such conditions remains smaller than 30 % of the maximum overall ground-fault current of the network. As a rule it may be said that if the compensation offset (undercompensation) exceeds the electrical length ($B_0$) of any individual feeder, Eqs. 14 and 15 maybe applied without restrictions.

The method based on monitoring the direction of change in the reactive component of the sum current (Eqs. 14 and 15) is also suited for use in network compensated with distributed arc-suppression elements provided that the compensation units located at the feeders are dimensioned so as to avoid overcompensation of the feeders during a ground fault, which is a design rule generally adopted. If the ground-fault protection is based on the monitoring of the real component of the sum current, whereby the feeders may become overcompensated without disturbing the protective system, also the fault indication scheme can be implemented based on the monitoring of the real component of the sum current.

In a compensated network having a supplementary grounding resistor connected permanently in parallel with the arc-suppression reactor, fault indication can be implemented based on monitoring the direction of change in the real component of the sum current (Eqs. 16 and 17). Theoretically, the real component of the sum current vector invoked by the leakage resistance of the unfaulted feeder is in phase with the zero-sequence voltage, which means that Eq. 16 is valid. In practice, however, the leakage resistance of the feeder is very high (in the order of megaohms). Therefore, the real component of the sum current vector during a ground fault is insignificantly small, whereby high demands are imposed on the measurement accuracy. To cope with the inaccuracy of measurements, it is possible to define a threshold value for the magnitude of the real component of the feeder sum current. Then, it can be required that the real component of the sum current vector invoked by the supplementary grounding resistor and/or the faulted feeder of electrical distribution system has to exceed said threshold value by a wide margin. The predetermined threshold value may be used as a criterion complementing the results obtained from Eqs. 16 and 17.

In an isolated-neutral network, it is impossible that Eq. 14 or 15 would give zero as a result. Therefore, the sensitivity of fault indication and, hence, the result thereof is dictated only by the accuracy of measurements. In a compensated system, it is theoretically possible that a ground fault does not cause any change in the reactive component of the sum current of the faulted feeder, which means that Eqs. 14 and 15 give a zero result. This kind of a situation may occur if the compensation offset (undercompensation) is exactly equal to the electrical length ($B_0$) of the faulted feeder. Inasmuch such a situation can arise only theoretically, it does not merit to be taken into account in practical considerations.

### IV Indication of an impending fault condition of feeder or faulted feeder from the sign of the ground susceptance of the feeder

An alternative technique of indicating an impending fault condition of medium-voltage feeder is to compute the ground admittance of the feeder from changes in the sum current and zero-sequence voltage and then to examine the sign of the imaginary part of the ground admittance, that is, of the ground susceptance. The ground conductance of the feeder is ignored in the examination inasmuch this parameter cannot be determined at a sufficiently good accuracy by concurrent measurement methods. Even the sign of a ground conductance value acquired by measurements may be incorrect as compared with that obtained from a theoretical treatise. Accordingly, the criteria for identifying a feeder as either unfaulted or faulted are:

$$\text{Im}\left(\frac{\Delta \underline{I}_{0i}}{\Delta \underline{U}_0}\right) < 0 \qquad \rightarrow \text{unfaulted feeder} \qquad (20)$$

$$\text{Im}\left(\frac{\Delta \underline{I}_{0i}}{\Delta \underline{U}_0}\right) > 0 \qquad \rightarrow \text{faulted feeder} \qquad (21)$$

The computation is started when the change in the zero-sequence voltage exceeds a predetermined threshold value (Eq. 13). The limitations in the application and use of Eqs. 20 and 21 are the same as those related to Eqs. 14 and 15.

**V Indication of impending fault condition of ring feeder in an electrical network from the direction of change in the sum current or from the sign of the ground susceptance of the feeder**

A high-voltage electrical distribution network is conventionally constructed using ring feeders in order to provide alternative feed paths in a faulted network and to improve the overall reliability of the network. In the following is examined the indication of a ground fault occurring in a ring feeder supplied from two feeders of one and the same substation (FIG. 3).

Ground faults of very high resistance affecting a feeder supplied from feeders connected into a ring configuration can be indicated using the same algorithms (Eqs. 14 - 21) as those applicable to a radial feeder. The only difference herein is that the sum current of a radial feeder is replaced by the sum current of the feeders feeding the ring. Later in the text, the sum of the zero-sequence currents of feeders A and B shown in FIG. 3 are referred to as "the total sum current of the ring feeder."

An impending fault condition of feeder or faulty ring feeder (AB) may be identified from the direction of change in the reactive component of the total zero-sequence sum current vector ($\underline{I}_{0A} + \underline{I}_{0B}$) as described below:

$$\Delta I_{0ABI} = |\Delta \underline{I}_{0AB}| \sin(\varphi_{I_{0AB}} - \varphi_{U_0}) < 0 \rightarrow \text{unfaulted ring} \qquad (22)$$

$$\Delta I_{0ABI} = |\Delta \underline{I}_{0AB}| \sin(\varphi_{I_{0AB}} - \varphi_{U_0}) > 0 \rightarrow \text{faulty ring} \qquad (23)$$

$$\Delta \underline{I}_{0AB} = (\underline{I}_{0A2} + \underline{I}_{0B2}) - (\underline{I}_{0A1} + \underline{I}_{0B1}) \qquad (24)$$

$$\varphi_{I_{0AB}} = \arg(\Delta \underline{I}_{0AB}) \qquad (25)$$

$$\varphi_{U_0} = \arg(\underline{U}_{0M} - \underline{U}_0') \qquad (26)$$

where

$\underline{U}_0' =$    zero-sequence voltage of network prior to the change
$\underline{U}_{0M} =$    zero-sequence voltage of network after the change
$I_{0A1} =$    sum current of feeder A prior to the change in zero-sequence voltage
$I_{0B1} =$    sum current of feeder B prior to the change in zero-sequence voltage
$I_{0A2} =$    sum current of feeder A after the change in zero-sequence voltage
$I_{0B2} =$    sum current of feeder B after the change in zero-sequence voltage
$\varphi_{I0AB} =$    phase angle of change vector $\Delta \underline{I}_{0AB}$
$\varphi_{U0} =$    phase angle of change vector $\Delta \underline{U}_0$
$B_{0r} =$    summed ground susceptance (sum of all three phases) of the ring feeder feeders (FIG. 3: A+B)

Analogous to the preceding example, an impending fault condition of feeder or faulty ring feeder (AB) can be indicated from the direction of change in the real component of the total sum current ($\underline{I}_{0A} + \underline{I}_{0B}$) as follows:

$$\Delta I_{0ABp} = |\Delta \underline{I}_{0AB}| \cos(\varphi_{I_{0AB}} - \varphi_{U_0}) > 0 \rightarrow \text{unfaulted ring} \qquad (27)$$

$$\Delta I_{0ABp} = |\Delta \underline{I}_{0AB}| \cos(\varphi_{I_{0AB}} - \varphi_{U_0}) < 0 \rightarrow \text{faulty ring .} \qquad (28).$$

**VI Indication of impending fault condition of feeder or faulted feeder of a ring feeder in an electrical distribution system, e.g., in a compensated network, from the direction of change in the ground-fault current**

In a fully compensated network which in practice, however, is operated using a slight offset tuning, it is possible to use the method of Eq. 3. This technique is suited for both isolated-neutral, partially compensated and fully compensated networks. In contrast, the techniques described above in items IV, V and VI are not suitable as such for use in fully compensated network, because in a resonant-neutral network the sum current vector of a faulted feeder is directed in the same direction as those of the unfaulted feeders and, moreover, has approximately the same magnitude as that of the electrical length of the feeder. In the following is explained a method suitable for monitoring the electrical insulation condition of a feeder in a fully compensated network. The method does not need *a priori* information on the electrical length of the feeder.

The method described in item V cannot be used in a fully compensated system because, if the ground susceptance is computed from the change caused by the ground fault in the zero-sequence voltage, a negative value of the ground susceptance of the faulted feeder is obtained approximately corresponding to the electrical length of the feeder, whether faulted or unfaulted. For a high-resistance ground fault, the ground susceptance computed for the faulted feeder becomes slightly smaller than the actual value as a result of the offset tuning of the arc-suppression reactor (undercompensation). While the difference is difficult to determine exactly, it is anyhow in the same order of magnitude with the inaccuracy of the measurement values. Hence, in contrast to an isolated-neutral system, it is possible in a fully compensated system to compute the ground admittance of the faulted feeder, too. However, the insulation condition monitoring of the feeder must be performed using other techniques if it is desired to avoid the uncertainty factors related to the electrical length of the feeder.

Insulation condition monitoring of a feeder in a fully compensated system can be implemented by way of causing a change in the tuning of the arc-suppression reactor that subsequently causes a change in the zero-sequence voltage and zero-sequence currents in the network. To indicate a high-impedance insulation fault (ground fault) at the earliest possible stage and independently from the feeder configuration, the tuning changes of the arc-suppression reactor may be arranged to take place at regular intervals. On the other hand, the algorithm described herein can be used as a confirming method when the fault has been indicated by some other technique. The method permits the verification of the insulation condition of feeders even when no change in the zero-sequence voltage exceeding the predetermined threshold value has occurred in the network. It is possible that a fault of a very high resistance haphazardly exactly compensates for the unfaulted-state zero-sequence voltage of the network caused by the capacitance unsymmetry of the network thus invoking only a very small change, whereby the other fault indication algorithms are not necessarily triggered. However, the probability of such a case is extremely minimal.

The algorithm described below is based on the computation of the change occurring in the reactive component of the ground-fault current as a result of a change in the tuning of the arc-suppression reactor. The basic concept is to compute the ground admittances of the feeders during each change of tuning, thus disposing with the need for *a priori* computed values. The computed ground admittance values are stored as reference values up to the next change in the zero-sequence voltage. The change in the ground-fault current is computed from the following equations:

$$\Delta \underline{I}_{ei} = |\underline{I}_{eib}| \sin \varphi_{U_{vFb}} - |\underline{I}_{eia}| \sin \varphi_{U_{vFa}} \tag{29}$$

$$\Delta \underline{I}_{et} = \left| \underline{I}_{0ib} \right| \sin \varphi_{I_{0ib}} - \mathrm{Im}\!\left( \frac{\Delta \underline{I}_{0t}}{\Delta \underline{U}_0} \right) \left| \underline{U}_{0b} \right| - \left| \underline{I}_{0ia} \right| \sin \varphi_{I_{0ia}} + \mathrm{Im}\!\left( \frac{\Delta \underline{I}_{0t}}{\Delta \underline{U}_0} \right) \left| \underline{U}_{0a} \right| \tag{30}$$

where

| | |
|---|---|
| $I_{eia}$ = | ground-fault current of feeder i at tuning setting a |
| $I_{eib}$ = | ground-fault current of feeder i at tuning setting b |
| $\varphi_{U_{vFa}}$ = | phase angle of faulted phase voltage relative to zero-sequence voltage at tuning setting a |
| $\varphi_{U_{vFb}}$ = | phase angle of faulted phase voltage relative to zero-sequence voltage at tuning setting b |
| $I_{0ia}$ = | zero-sequence sum current of feeder i at tuning setting a |
| $I_{0ib}$ = | zero-sequence sum current of feeder i at tuning setting b |
| $\varphi_{I_{0ia}}$ = | phase angle of sum current of feeder i relative to zero-sequence voltage at tuning setting a |
| $\varphi_{I_{0ib}}$ = | phase angle of sum current of feeder i relative to zero-sequence voltage at tuning setting b |
| $\Delta \underline{I}_{0i}$ = | change in sum current of feeder i |
| $\Delta \underline{U}_0$ = | change in network zero-sequence voltage due to change in tuning |
| $\underline{U}_{0a}$ = | network zero-sequence voltage at tuning setting a |
| $\underline{U}_{0b}$ = | network zero-sequence voltage at tuning setting b. |

Term $\Delta\underline{I}_{ei}$ is computed separately for each feeder. Naturally, the value of $\Delta\underline{I}_{ei}$ for an unfaulted feeder is essentially close to zero. Additionally, it deserves to compute the ground-fault current $\underline{I}_e$ separately for the tuning settings a and b. With these provisions, only the faulted feeder shows a change in the ground-fault current when the tuning setting is altered. In order to obtain a maximally reliable indication of a ground fault, advantageously a greater number than two different tuning settings are used. Hereby, the normal tuning setting may be complemented, e.g., by adjusting the reactor tuning into two other settings, one of which biased toward the undercompensated side and the other toward overcompensation. This procedure causes the sign of $\Delta\underline{I}_{ei}$ to change if both ones of the offset tuning conditions are referenced to the normal tuning of the arc-suppression reactor.

The computed values of ground susceptance may be used as reference values also after the change of reactor tuning, thus facilitating continuous monitoring of the ground-fault current.

**VII Indication of impending fault condition of feeder of ring feeder of a compensated network from a change in the ground-fault current**

As mentioned in items II and V, a high-voltage electrical distribution network is conventionally constructed using ring feeders in order to provide alternative feed paths in a faulted network and to improve the overall reliability of the network. In the following is examined the indication of a ground fault on a ring feeder supplied from two feeders of one and the same substation (FIG. 3) with the help of a change detected in the ground fault current.

Ground faults of very high resistance can be indicated in the case of feeders configured to supply a ring feeder using the same algorithm (Eq. 30) as that applicable to a radial feeder. The only difference herein is that the sum current of a radial feeder is replaced by the sum current of the feeders feeding the ring. The sum of the zero-sequence currents of feeders A and B shown in FIG. 3 is later in the text referred to as "the total sum current of the ring feeder."

An impending fault condition of feeder or faulty ring feeder (AB) may be identified from the direction of change in the ground-fault current computed from the reactive component of the total sum current vector ($\underline{I}_{0A} + \underline{I}_{0B}$) as described below:

$$\Delta\underline{I}_{eAB} = \left| \underline{I}_{0ABb} \right| \sin\varphi_{I_{0ABb}} - \mathrm{Im}\left( \frac{\Delta\underline{I}_{0AB}}{\Delta\underline{U}_0} \right) \left| \underline{U}_{0b} \right| - \left| \underline{I}_{0ABa} \right| \sin\varphi_{I_{0ABa}} + \mathrm{Im}\left( \frac{\Delta\underline{I}_{0AB}}{\Delta\underline{U}_0} \right) \left| \underline{U}_{0a} \right| \quad (31)$$

$$\Delta\underline{I}_{0AB} = (\underline{I}_{0A2} + \underline{I}_{0B2}) - (\underline{I}_{0A1} + \underline{I}_{0B1}) \quad (32)$$

where

$\underline{I}_{0ABa}$ =     sum current of ring feeder AB at tuning setting a
$\underline{I}_{0ABb}$ =     sum current of ring feeder AB at tuning setting b
$\Delta\underline{I}_{0AB}$ =     change in sum current of ring feeder AB
$\varphi_{I_{0ABa}}$ =     phase angle between vectors $\underline{I}_{0ABa}$ and $\underline{U}_{0a}$ at tuning setting a
$\varphi_{I_{0ABb}}$ =     phase angle between vectors $\underline{I}_{0ABb}$ and $\underline{U}_{0b}$ at tuning setting b.

**VIII Determination of electrical insulation condition of a feeder in an electrical network by means of altering the tuning of compensation**

Compensated systems are practically always operated with a slight offset tuning, because it is impossible to meet an exactly resonant condition of the network (e.g., at 50 Hz). If the degree of compensation is exactly 100 %, whereby the reactive component of the ground-fault current is zero, also the denominator of Eq. 3 is zero. Then, the value of fault resistance computed from. Eq. 3 becomes infinite. While the situation is theoretical, it is still possible around the 100 % degree of compensation to compute the fault resistance also by way of effecting a change in the compensation tuning. When compensation tuning is deviated toward either under- or overcompensation, a change is detected in the zero-sequence voltage, the sum currents of feeders and the ground-fault current. Based thereon, the fault resistance can be computed from Eq. 33. For an unfaulted feeder, the value of fault resistance is negative.

$$R_{Fi} = \mathrm{Re}\left(\frac{\Delta\underline{U}_{vF}}{\Delta\underline{I}_{0i} + jB_{0i}\Delta\underline{U}_0}\right) = \mathrm{Re}\left(\frac{\Delta\underline{U}_0}{\Delta\underline{I}_{0i} + jB_{0i}\Delta\underline{U}_0}\right) \tag{33}$$

$$\Delta\underline{U}_{vF} = \underline{U}_{vFb} - \underline{U}_{vFa} \tag{34}$$

$$\Delta\underline{I}_{0i} = \underline{I}_{0ib} - \underline{I}_{0ia} \tag{35}$$

$$\Delta\underline{U}_0 = \underline{U}_{0b} - \underline{U}_{0a} \tag{36}$$

where

| | |
|---|---|
| $R_{Fi} =$ | fault resistance of feeder i |
| $\underline{U}_{vFa} =$ | voltage from faulted phase to ground at tuning setting a |
| $\underline{U}_{vFb} =$ | voltage from faulted phase to ground at tuning setting b |
| $\underline{I}_{0ia} =$ | sum current of feeder i at tuning setting a |
| $\underline{I}_{0ib} =$ | sum current of feeder i at tuning setting b |
| $\underline{U}_{0a} =$ | zero-sequence voltage of network at tuning setting a |
| $\underline{U}_{0b} =$ | zero-sequence voltage of network at tuning setting b |
| $B_{0i} =$ | summed ground susceptance (imaginary part of ground admittance) of all three phases of feeder i. |

**Summary**

According to field tests, the methods disclosed herein provide a minimum detection sensitivity of 190 kohm. The indication method of Eqs. 29 and 30 based on the computation of change in the reactive component of the ground-fault current is usable in such a network wherein the zero-sequence voltage can be deviated either by adjusting the impedance of the arc-suppression reactor or through other means such as altering the ground capacitance of the network. Accordingly, the invention is not necessarily limited to applications in a compensated network. Rather, the method of Eqs. 3 and 5 based on the computation of the fault resistance is usable in both neutral-isolated networks and those compensated to a varying degree. Eqs. 14 and 15, as well as 20 and 21, can be applied within the limiting condition explained in item III (Indication of an impending fault condition of feeder or faulted feeder in an electrical network from the direction of change in the sum current vector). All of the methods disclosed herein are usable for both radial feeders and ring feeders. Each one of the monitored feeders must be equipped with multifunction protective relays (at compartmentalized cell terminals). The measurement data typically needed comprise one line-to-line voltage, the zero-sequence voltage, the line-to-neutral voltages (for computation of fault resistance), and the sum currents of the feeders. However, Eqs. 14 - 28 do not need measurement data about the line-to-neutral voltages. All the measurement facilities required in the method are readily available at any substation.

Eq. 30 may be applied alone for indication of a high-resistance ground fault in a compensated network. Additionally, Eq. 30 can be used for verification of the results obtained from the fault indication methods described in items I, II, III, IV or V. Hence, a failing insulation condition can be detected very reliably. Naturally, any one of the disclosed methods can be applied individually for monitoring the insulation condition of each feeder separately.

In lieu of the two different degrees of tuning mentioned above, it is possible according to the invention to utilize a greater number of varied tuning settings (degrees of compensation). According to the invention, the tuning settings can be equally well biased toward an overtuned as well as an undertuned condition.

Obviously, the invention is not limited to the exemplary embodiments described above but rather encompasses all variants thereof within the scope and spirit of the appended claims. The various methods discussed herein may also be used in parallel in order to achieve a maximal reliable fault indication.

In the description, an underlined symbol (e.g., $\Delta\underline{U}_0$) denotes a vector. The vectors (expressed by phase angles and absolute values) used in the computations are determined by simultaneous measurements to within the accuracy affordable by the practice of measurement techniques.

In the foregoing, the invention is described using a three-phase system as an example. Obviously, the invention is also applicable to networks of other kinds of phase systems.

**References:**

(Lei97): Leitloff V. et.al.: Detection of resistive single-phase earth fault in a compensated power-distribution system. ETEP Vol. 7, No 1, January/February, 1997.

**Claims**

1. A method for identification of an impending fault condition of feeder or faulted feeder, such as a radial feeder or a ring feeder or a feeder branch connected to said feeder, in an electrical distribution system such as a compensated network, the method comprising the steps of:

   - measuring in the network a first set of parameter values for determination of a change in the ground-fault current,
   - altering the setting of the network compensation tuning in a first direction, and
   - measuring from the network, which now operates under a tuning setting altered in said first direction, at least one second set of parameter values for determination of a change in the ground-fault current,

   **characterized in that**

   - the change in the ground-fault current is computed on the basis of said first set of parameter values and said at least one second set of parameter values, and
   - an impending fault condition of feeder or faulted feeder or branch is identified on the basis of at least one computationally determined change in the ground-fault current.

2. The method of claim 1, **characterized in that**, subsequent to the measurement of said second set of parameter values,

   - the tuning of the network compensation is altered in another direction,
   - under the tuning setting altered in the other direction, the network variable are measured to determine at least one third set of parameter values for determination of a change in the ground-fault current,
   - the change in the ground-fault current is computed on the basis of said at least one third set of parameter values and said at least one first and/or said second set of parameter values, and
   - the impending fault condition of feeder or faulted feeder or feeder branch is indicated utilizing the computationally determined change in the ground-fault current.

3. The method of claim 2, **characterized in that** the network tuning is altered so that said sets of measured parameter values include at least one set of parameter values that is measured under an overcompensated state of the network and at least one set of parameter values measured under an undercompensated state of the network.

4. The method of any one of the foregoing claims, **characterized in that**

   - the tuning of an arc-suppression reactor connected to the neutral point of the network is altered so as to obtain a change in the zero-sequence voltage of the network, and
   - the impending fault condition of feeder or faulted feeder is indicated by computing the change of the ground-fault current $\Delta \underline{I}_{ei}$ for two consecutive settings (a, b) of compensation tuning, and, if the change of the ground-fault current $\Delta \underline{I}_{ei}$ is essentially different from zero, the feeder is identified as faulted or, alternatively, the leakage resistance of the feeder is computed with the help of the change made in the compensation tuning.

5. The method of any one of foregoing claims, **characterized in that** the change in the ground-fault current is computed separately for each one of feeders i from the following equations:

$$\Delta \underline{I}_{ei} = |\underline{I}_{eib}| \sin \varphi_{U_{vFb}} - |\underline{I}_{eia}| \sin \varphi_{U_{vFa}} \tag{29}$$

$$\Delta \underline{I}_{ei} = \left| \underline{I}_{0ib} \right| \sin \varphi_{I_{0ib}} - \mathrm{Im}\!\left( \frac{\Delta \underline{I}_{0i}}{\Delta \underline{U}_0} \right) \left| \underline{U}_{0b} \right| - \left| \underline{I}_{0ia} \right| \sin \varphi_{I_{0ia}} + \mathrm{Im}\!\left( \frac{\Delta \underline{I}_{0i}}{\Delta \underline{U}_0} \right) \left| \underline{U}_{0a} \right| \qquad (30)$$

where

$\underline{I}_{eia}$ =    ground-fault current of feeder i at tuning setting a
$\underline{I}_{eib}$ =    ground-fault current of feeder i at tuning setting b
$\varphi_{U_{vFa}}$    phase angle of faulted phase voltage relative to zero-sequence voltage at tuning setting a
$\varphi_{U_{vFb}}$ =    phase angle of faulted phase voltage relative to zero-sequence voltage at tuning setting b
$\underline{I}_{0ia}$ =    sum current of feeder i at tuning setting a
$\underline{I}_{0ib}$ =    sum current of feeder i at tuning setting b
$\varphi_{I_{0ia}}$ =    phase angle of sum current of feeder i relative to zero-sequence voltage at tuning setting a
$\varphi_{I_{0ib}}$ =    phase angle of sum current of feeder i relative to zero-sequence voltage at tuning setting b
$\Delta \underline{I}_{0i}$ =    change in sum current of feeder i
$\Delta \underline{U}_0$ =    change in network zero-sequence voltage due to change in tuning
$\underline{U}_{0a}$ =    network zero-sequence voltage at tuning setting a, and
$\underline{U}_{0b}$ =    network zero-sequence voltage at tuning setting b.

6.    The method of any of foregoing claims, **characterized in that**

-    the faulty phase is detected with the help of the measured line-to-neutral voltages and the zero-sequence voltage $\Delta U_0 = \underline{U}_{0M} - \underline{U}_0'$ (Eq. 10), and
-    the fault resistance $R_F$ is computed separately for each one of the feeders from equation

$$R_F = \mathrm{Re}\!\left( \frac{\Delta \underline{U}_{vF}}{\Delta \underline{I}_0 + jB_0 \Delta \underline{U}_0} \right) = \mathrm{Re}\!\left( \frac{\Delta \underline{U}_0}{\Delta \underline{I}_0 + jB_0 \Delta \underline{U}_0} \right)$$

where

$R_F$ =    fault resistance at feeder i
$\Delta \underline{U}_{vF}$ =    change of voltage between faulted phase and ground due to change of compensation tuning
$\Delta \underline{I}_0$ =    change in the sum current due to change of compensation tuning
$\Delta \underline{U}_0$ =    change in zero-sequence voltage after change of compensation tuning
$B_0$ =    summed line-to-ground susceptance of the three phases at feeder i (imaginary part of line-to-ground admittance).

7.    The method of any one of foregoing claims, **characterized in that**

-    the absolute value $|\Delta \underline{U}_0| = |\underline{U}_{02} - \underline{U}_{01}|$ of the zero-sequence voltage change is computed in vector format under a changing condition of the network, whereby $\underline{U}_{01}$ is the zero-sequence voltage measured prior to the change and $\underline{U}_{02}$ is the zero-sequence voltage measured after the change,
-    the computed value $|\Delta \underline{U}_0|$ is tested against a predetermined threshold value for the condition $|\Delta \underline{U}_0| \geq U_{0k}$,
-    the identification of the impending fault condition of feeder or faulty feeder or feeder branch is started if the change in the zero-sequence voltage exceeds the predetermined threshold value, the impending fault condition of feeder or faulty feeder or feeder branch, and
-    the impending fault condition of feeder or faulty feeder or feeder branch is identified based on:

-    the sign of the imaginary part

$$\mathrm{Im}\left(\frac{\Delta \underline{I}_{0i}}{\Delta \underline{U}_0}\right)$$

of the ground admittance, whereby a positive sign indicates a faulty feeder, or, alternatively,

- the direction of change in the reactive or the real component of the sum current vector.

8. The method of claim 7, **characterized in that** a fault in an impending fault condition of feeder or faulty feeder is identified from the direction of change in the reactive component of the sum current vector according to the following equations:

$$\Delta I_{0li} = |\underline{I}_{02i} - \underline{I}_{01i}|\sin(\varphi_{I_{0i}} - \varphi_{U_0}) < 0 \rightarrow \text{unfaulted feeder} \tag{14}$$

$$\Delta I_{0li} = |\underline{I}_{02i} - \underline{I}_{01i}|\sin(\varphi_{I_{0i}} - \varphi_{U_0}) > 0 \rightarrow \text{faulted feeder} \tag{15}$$

$$\varphi_{I_{0i}} = \arg(\Delta \underline{I}_{0i}) = \arg(\underline{I}_{02i} - \underline{I}_{01i}) \tag{18}$$

$$\varphi_{U_0} = \arg(\Delta \underline{U}_0) = \arg(\underline{U}_{02} - \underline{U}_{01}) \tag{19}$$

where

$\Delta I_{0li} =$    change in reactive component of sum current at feeder i
$\underline{I}_{01i} =$    sum current of feeder i prior to the change
$\underline{I}_{02i} =$    sum current of feeder i after the change
$\underline{U}_{01} =$    zero-sequence voltage prior to the change
$\underline{U}_{02} =$    zero-sequence voltage after the change
$\varphi_{I_{0i}} =$    phase angle of sum current change vector $\Delta \underline{I}_{0i}$
$\varphi_{U_0} =$    phase angle of zero-sequence voltage change vector $\Delta \underline{U}_0$.

9. The method of claim 7, **characterized in that** an impending fault condition of feeder or faulty feeder is identified from the direction of change in the real component of the sum current vector according to the following equations:

$$\Delta I_{0pi} = |\underline{I}_{02i} - \underline{I}_{01i}|\cos(\varphi_{I_{0i}} - \varphi_{U_0}) > 0 \rightarrow \text{unfaulted feeder} \tag{16}$$

$$\Delta I_{0pi} = |\underline{I}_{02i} - \underline{I}_{01i}|\cos(\varphi_{I_{0i}} - \varphi_{U_0}) < 0 \rightarrow \text{faulted feeder} \tag{17}$$

$$\varphi_{I_{0i}} = \arg(\Delta \underline{I}_{0i}) = \arg(\underline{I}_{02i} - \underline{I}_{01i}) \tag{18}$$

$$\varphi_{U_0} = \arg(\Delta \underline{U}_0) = \arg(\underline{U}_{02} - \underline{U}_{01}) \tag{19}$$

where

$\Delta I_{0pi} =$    change in real component of sum current at feeder i
$\underline{I}_{01i} =$    sum current of feeder i prior to the change
$\underline{I}_{02i} =$    sum current of feeder i after the change
$\underline{U}_{01} =$    zero-sequence voltage prior to the change
$\underline{U}_{02} =$    zero-sequence voltage after the change

$\varphi_{I_{0i}} =$ phase angle of sum current change vector $\Delta\underline{I}_{0i}$

$\varphi_{U_0} =$ phase angle of zero-sequence voltage change vector $\Delta\underline{U}_0$.

**10.** The method of claim 7, **characterized in that** a faulty feeder is identified by examining the sign of the imaginary part of the ground admittance ($\underline{Y}_{0i}$) as follows:

$$\text{Im}\left(\frac{\Delta\underline{I}_{0i}}{\Delta\underline{U}_0}\right) < 0 \qquad\qquad \rightarrow \text{unfaulted feeder} \qquad\qquad (20)$$

$$\text{Im}\left(\frac{\Delta\underline{I}_{0i}}{\Delta\underline{U}_0}\right) > 0 \qquad\qquad \rightarrow \text{faulted feeder} \qquad\qquad (21)$$

where

$\Delta\underline{I}_{0i} =$ change in the sum current of feeder i

$\Delta\underline{U}_0 =$ change in zero-sequence voltage.

**11.** The method of claim 7 for identification of a fault in a ring-connected feeder of an electrical network, **characterized in that** a fault in an impending fault condition of feeder or faulty ring feeder (AB) is identified by examining the direction of change in the reactive component of the total sum current ($\underline{I}_{0A} + \underline{I}_{0B}$) as follows:

$$\Delta I_{0ABp} = |\Delta I_{0AB}|\cos(\varphi_{I0AB} - \varphi_{U_0}) > 0 \rightarrow \text{unfaulted ring} \qquad\qquad (27)$$

$$\Delta I_{0ABp} = |\Delta I_{0AB}|\cos(\varphi_{I_{0AB}} - \varphi_{U_0}) < 0 \rightarrow \text{faulty ring} \qquad\qquad (28)$$

$$\Delta\underline{I}_{0AB} = (\underline{I}_{0A2} + \underline{I}_{0B2}) - (\underline{I}_{0A1} + \underline{I}_{0B1}) \qquad\qquad (26)$$

$$\varphi_{I_{0AB}} = \arg(\Delta\underline{I}_{0AB})$$

$$\varphi_{U_0} = \arg(\underline{U}_{02} - \underline{U}_{01})$$

where

$\Delta I_{0AB1} =$ change in the reactive component of the total sum current ($\underline{I}_{0A} + \underline{I}_{0B}$) of the ring-connected feeder

$\Delta\underline{I}_{0AB} =$ change in the total sum current ($\underline{I}_{0A} + \underline{I}_{0B}$) of the ring-connected feeder

$\underline{U}_{01} =$ network zero-sequence voltage prior to the change

$\underline{U}_{02} =$ network zero-sequence voltage after the change

$\underline{I}_{0A1} =$ sum current of ring-connected feeder A prior to the change in the zero-sequence voltage

$\underline{I}_{0B1} =$ sum current of ring-connected feeder B prior to the change in the zero-sequence voltage

$\underline{I}_{0A2} =$ sum current of ring-connected feeder A after the change in the zero-sequence voltage

$\underline{I}_{0B2} =$ sum current of ring-connected feeder B after the change in the zero-sequence voltage

$\varphi_{I_{0AB}} =$ phase angle of vector $\Delta\underline{I}_{0AB}$

$\varphi_{U_0} =$ phase angle of vector $\Delta\underline{U}_0$.

**12.** The method of claim 7 for identification of a fault in a ring-connected feeder of an electrical network, **characterized in that** a fault in an impending fault condition of feeder or faulty ring feeder (AB) is identified by examining the direction of change in the real component of the total sum current ($\underline{I}_{0A} + \underline{I}_{0B}$) as follows:

$$\Delta I_{0ABp} = |\Delta \underline{I}_{0AB}| \cos(\varphi_{I0AB} - \varphi_{U_0}) > 0 \rightarrow \text{unfaulted ring} \tag{27}$$

$$\Delta I_{0ABp} = |\Delta \underline{I}_{0AB}| \cos(\varphi_{I_{0AB}} - \varphi_{U_0}) < 0 \rightarrow \text{faulty ring} \tag{28}$$

$$\Delta \underline{I}_{0AB} = (\underline{I}_{0A2} + \underline{I}_{0B2}) - (\underline{I}_{0A1} + \underline{I}_{0B1}) \tag{26}$$

$$\varphi_{I_{0AB}} = \arg(\Delta \underline{I}_{0AB}) \tag{25}$$

$$\varphi_{U_0} = \arg(\underline{U}_{02} - \underline{U}_{01}) \tag{26}$$

where

$\Delta I_{0ABp} =$     change in the reactive component of the total sum current ($\underline{I}_{0A} + \underline{I}_{0B}$) of the ring-connected feeder
$\Delta I_{0AB} =$     change in the total sum current ($\underline{I}_{0A} + \underline{I}_{0B}$) of the ring-connected feeder
$\underline{U}_{01} =$     network zero-sequence voltage prior to the change
$\underline{U}_{02} =$     network zero-sequence voltage after the change
$\underline{I}_{0A1} =$     sum current of ring-connected feeder A prior to the change in the zero-sequence voltage
$\underline{I}_{0B1} =$     sum current of ring-connected feeder B prior to the change in the zero-sequence voltage
$\underline{I}_{0A2} =$     sum current of ring-connected feeder A after the change in the zero-sequence voltage
$\underline{I}_{0B2} =$     sum current of ring-connected feeder B after the change in the zero-sequence voltage
$\varphi_{I0AB} =$     phase angle of vector $\Delta I_{0AB}$
$\varphi_{U_0} =$     phase angle of vector $\Delta \underline{U}_0$.

**13.** The method of claim 7 for identification of a fault in a ring-connected feeder of an electrical network, **characterized in that** a fault in an impending fault condition of feeder or faulty ring feeder (AB) is identified by examining the sign of the imaginary part of ground admittance computed from the total sum current ($\underline{I}_{0A} + \underline{I}_{0B}$) as follows:

$$\text{Im}\left(\frac{\Delta \underline{I}_{0AB}}{\Delta \underline{U}_0}\right) < 0 \qquad \rightarrow \text{unfaulted ring}$$

$$\text{Im}\left(\frac{\Delta \underline{I}_{0AB}}{\Delta \underline{U}_0}\right) > 0 \qquad \rightarrow \text{faulty ring}$$

$$\Delta \underline{I}_{0AB} = (\underline{I}_{0A2} + \underline{I}_{0B2}) - (\underline{I}_{0A1} + \underline{I}_{0B1}) \tag{24}$$

$$\Delta \underline{U}_0 = \underline{U}_{02} - \underline{U}_{01}$$

where

$\Delta I_{0AB} =$     change in the total sum current ($\underline{I}_{0A} + \underline{I}_{0B}$) of the ring-connected feeder

$U_{01}$ = network zero-sequence voltage prior to the change
$U_{02}$ = network zero-sequence voltage after the change
$I_{0A1}$ = sum current of ring-connected feeder A prior to the change in the zero-sequence voltage
$I_{0B1}$ = sum current of ring-connected feeder B prior to the change in the zero-sequence voltage
$I_{0A2}$ = sum current of ring-connected feeder A after the change in the zero-sequence voltage
$I_{0B2}$ = sum current of ring-connected feeder B after the change in the zero-sequence voltage

**14.** The method of any one of foregoing claims, **characterized in that** additionally

- the faulted phase is identified with the help of the measured line-to-phase voltages and the zero-sequence voltage $\Delta U_0 = U_{0M} - U_0'$ (Eq. 6 or 10),
- for each one of the feeders i is computed the value of the fault resistance $R_{Fi}$ using the equation:

$$R_{Fi} = \frac{|U_{vF}|\sin\varphi_{U_{vF}}}{|\Delta I_{0i}|\sin\varphi_{I_{0i}} + B_{0i}|\Delta U_0|}$$

where

$U_{vF}$ = line-to-ground voltage of faulted phase
$\varphi_{U_{vF}}$ = differential phase angle between line-to-ground voltage vector $\Delta U_{vF}$ and differential voltage vector $\Delta U_0$
$\Delta I_{0i}$ = change of sum current at feeder i due a change in zero-sequence voltage
$\varphi_{I_{0i}}$ = differential phase angle between vectors $\Delta I_{0i}$ and $\Delta U_0$
$B_{0i}$ = summed line-to-ground susceptance of three phases of feeder i (imaginary part of ground admittance)

- the faulted phase is interpreted to be the one with a fault resistance ($R_{Fi}$) lower than a predetermined threshold value ($R_{Fk}$) (that is, $R_{Fi} < R_{Fk}$), and,
- in the case of a low-resistance ground fault (e.g., having a fault resistance smaller 1 kohm), the computed values of $R_{Fi}$ are compared with each other and faulted phase is interpreted to be the one with the lowest fault resistance.

**15.** The method of any one of foregoing claims for determining the insulation condition of a ring-connected feeder, **characterized in that** additionally

- the faulted phase is identified with the help of the measured line-to-phase voltages and the zero-sequence voltage $\Delta U_0 = U_{0M} - U_0'$ (Eq. 6 or 10),
- for each one of the ring-connected feeders is computed the value of the fault resistance $R_{Fi}$ using the equation:

$$R_{Fi} = \frac{|U_{vF}|\sin\varphi_{U_{vF}}}{|\Delta I_{0AB}|\sin\varphi_{I_{0AB}} + B_{0r}|\Delta U_0|} \tag{5}$$

where

$$\Delta U_0 = U_{0M} - U_0' \tag{6}$$

$$\Delta I_{0AB} = (I_{0A2} + I_{0B2}) - (I_{0A1} + I_{0B1}) \tag{7}$$

$$\varphi_{U_0} = \arg(U_{0M} - U_0'), \ \varphi_{I_{0AB}} = \arg(\Delta I_{0AB}) - \varphi_{U_0} \tag{7}$$

$R_{Fi}$ = fault resistance of ring-connected feeder i
$U_0'$ = network zero-sequence voltage prior to the change

$\underline{U}_{0M}$ = network zero-sequence voltage after the change

$\underline{I}_{0A1}$ = sum current of ring-connected feeder A prior to the change in the zero-sequence voltage

$\underline{I}_{0B1}$ = sum current of ring-connected feeder B prior to the change in the zero-sequence voltage

$\underline{I}_{0A2}$ = sum current of ring-connected feeder A after the change in the zero-sequence voltage

$\underline{I}_{0B2}$ = sum current of ring-connected feeder B after the change in the zero-sequence voltage

$\varphi_{U_0}$ = phase angle of vector $\Delta\underline{U}_0$

$\varphi_{I0AB}$ = differential phase angle between vector $\Delta\underline{I}_{0AB}$ and vector $\Delta\underline{U}_0$

$B_{0r}$ = summed line-to-ground susceptance of a ring-connected feeder (FIG. 3: A+B) (sum of all three phases).

**16.** The method of any one of foregoing claims for use in a compensated network, **characterized in that** additionally

- the line-to-ground voltages are determined in vector format, and
- the faulted phase is interpreted to be the one having the phase angle of its line-to-ground voltage falling within a predetermined range relative to the zero-sequence voltage change vector $\Delta\underline{U}_0$.

**Fig. 1**

EP 1 195 875 A2

Fig. 2

Fig. 3

EP 1 195 875 A2